# EUROPEAN PATENT APPLICATION

(11) **EP 1 505 333 A2**
(43) Date of publication of application: **09.02.2005**
(21) Application number: 04103694.8
(22) Date of filing: 30.07.2004
(51) Int. Cl.: F16M 11/10

(54) **Monitor**

(30) Priority: 06.08.2003 KR 2003054263
(71) Applicant: Samsung Electronics Co., Ltd., Suwon-si, Gyeonggi-Do 442-742 (KR)
(72) Inventor: Jeong, Jun-soo, Paldal-ku Kyungki-do (KR)
(74) Representative: Read, Matthew Charles

(57) **Abstract**

A monitor having a monitor body (3) to display a picture, and a base member (5) to support the monitor body (3). The monitor includes a link member (10) provided between the monitor body (3) and the base member (5); a base hinge (40) to rotatably connect the link member (10) and the base member (5) to enable the link member (40) to rotate relative to a surface of the base member (5); a monitor hinge (50) spaced from the base hinge (40) to rotatably combine the link member (10) and the monitor body (3); and a rotating limiter (6) provided between the link member (10) and the base member (5) to prevent a lower part of the monitor body (3) from making contact with the base member (5) or an installing surface of the base member (5) when the link member (10) rotates against the base member (5). Accordingly, the monitor according to an aspect of the present invention prevents the lower part of the monitor body (3) from making contact with the base member (5) when the height of the monitor body (3) is adjusted, and is convenient to use as the monitor body (3) can be tilted relative to the base member. Further, package size of the monitor is reduced to decrease transportation expense upon delivery because the monitor body can be folded to be parallel to the base member.

## Description

The present invention relates to a monitor comprising a base and a screen unit mounted to the base by a pivoting mechanism.

Generally, a LCD monitors comprises a screen unit and a base for supporting the screen unit on a surface, such as a desk.

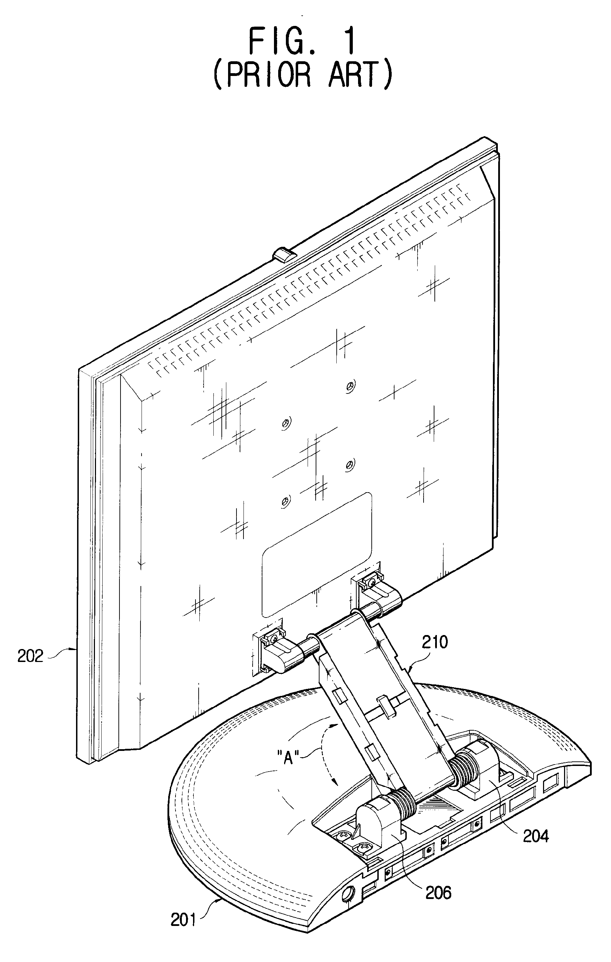

As illustrated in Figure 1, a conventional monitor comprises: a base member 201, a monitor body 202 incorporating an LCD panel and a leg 210 linking the base member 201 and the monitor body 202.

The bottom of the leg 210 is rotatably supported between a pair of supports 204, 206 mounted to the base member 201. The top of the leg 210 is connected to the monitor body 202. Consequently, the height of the monitor body 202 can be adjusted by pivoting the leg 210 in the directions indicated by the line A with respect to the base member 201.

With this configuration, the can be the possibility that the monitor body 202 can be pressed down so that it comes into contact with the base member 201 or the surface on which the monitor is standing.

Additionally, the monitor body 201 cannot be pivoted to lie parallel to the base member 201 for transport and cannot be rotated about an axis perpendicular to its screen.

A monitor, according to the present invention, is characterised by a stop for limiting movement of the screen unit such that the it cannot come into contact with the base or a surface on which the base is located when the monitor is in its operational configuration.

The screen unit may connected to the base by a parallel motion mechanism.

The screen unit may be attached to the pivoting mechanism by a rotary coupling which enables the screen unit to be rotated about an axis normal to its screen. The rotary coupling may comprise an annular male part received within a female part.

Additional preferred and optional features of the invention are set forth in claim 5 to 38 appended hereto.

An embodiment of the present invention will now be described, by way of example, with reference to Figures 2 to 12 of the accompanying drawings, in which:
Figure 1 is a rear perspective view of a conventional monitor;
Figure 2 is a rear perspective view of a monitor according to the present invention;
Figure 3 is a partial exploded perspective view of the monitor shown in Figure 1;
Figure 4 is an exploded perspective view of the rotary coupling of the monitor shown in Figure 2;
Figure 5 is a perspective view of the link member of the monitor, shown in Figure 2, and its couplings;
Figure 6 is a perspective view of the lower link member hinge of the monitor shown in Figure 2;
Figure 7 is a cross-sectional view taken along the line VII-VII in Figure 6;
Figures 8 to 10 are side views of the monitor body and its leg;
Figures 11 and 12 are front views of base, link member and rotary coupling of the monitor shown in Figure 1.

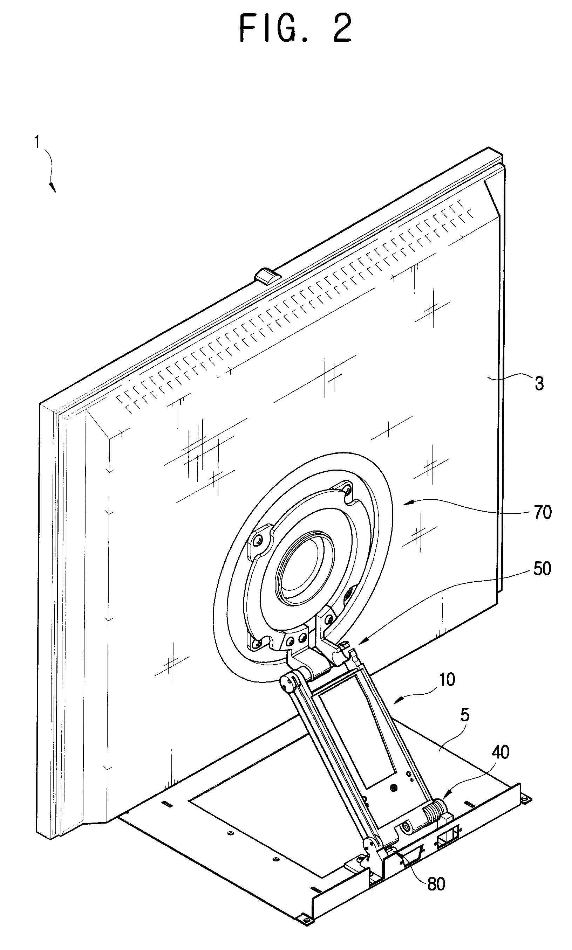

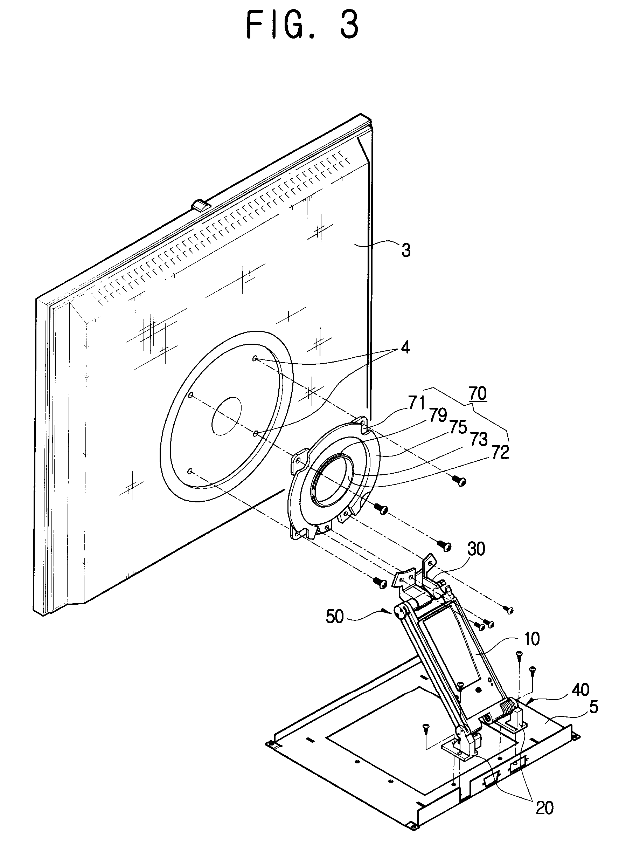

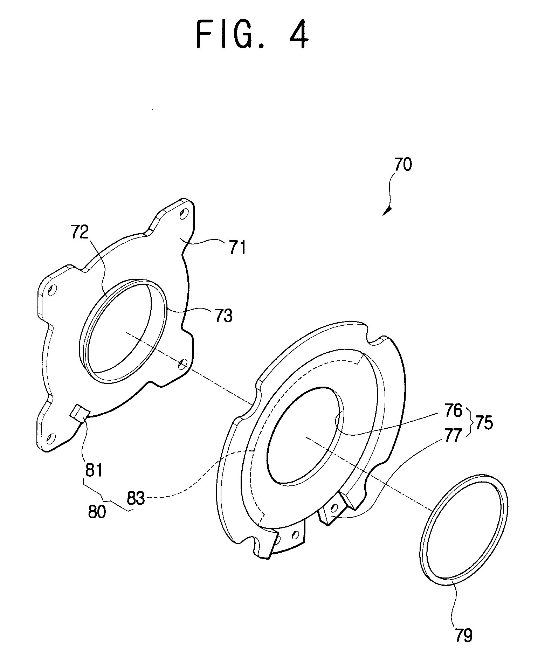

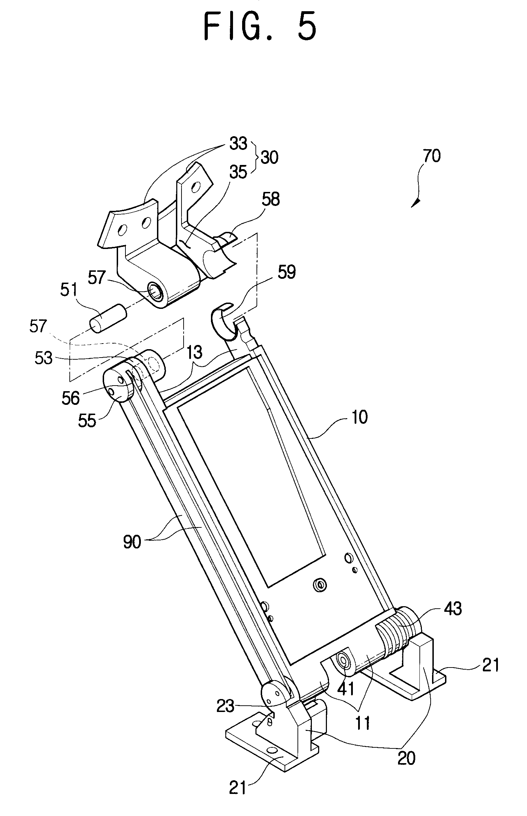

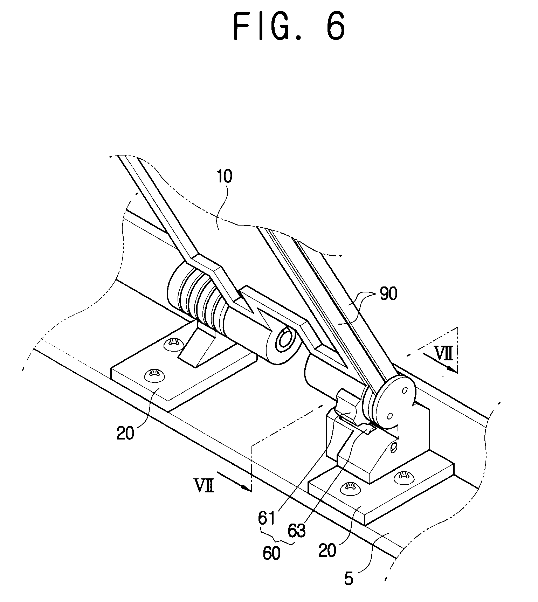

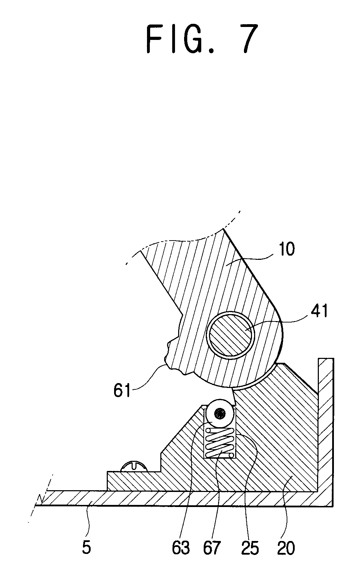

Referring to Figures 2 to 7, an monitor 1 according to the present invention comprises: a monitor body 3, a base member 5, a link member 10 provided between the monitor body 3 and the base member 5, a base hinge 40 at the base end of the link member and which enables the link member 10 to pivot with respect to the base member 5, a monitor hinge 50 at the monitor end of the link member 10 and which enables the monitor body to pivot back and forth with respect to the link member 10 and a stop 60 (shown in Figure 6) for limiting relative movement between the link member 10 and the base member 5 to prevent contact between a bottom portion of the monitor body 3 and the base member 5 or the surface on which the monitor is installed. The monitor 1 also comprises a rotary coupling 70 to pivotably link the monitor body 3 and the monitor hinge 50 to enable the monitor body 3 to pivot relative to the monitor hinge 50, and a main body bracket 30 (shown in Figure 3) provided between the rotary coupling 70 and the monitor hinge 50.

The monitor body 3 houses a flat display panel such as an LCD, a PDP or similar display panel.

The base member 5 can be placed on a surface such as a desk to support the monitor body 3. As shown in Figure 3, a pair of hinge supports 20 are mounted to to the base member 5. The base hinge 40 is supported by the hinge supports 20.

The link member 10, which is shaped similar to a rectangular plate, comprises a lower part 11 connected to the base hinge 40 and an upper part 13 connected to the monitor hinge 50. The link member 10 is provided with a cable guide part (not shown) to accommodate and guide a cable (not shown) that conveys image signals from the base member 5 to the monitor body 3.

The hinge supports 20 on opposite sides of the lower part 11 of the link member 10. The bottom portions of the hinge supports 20 comprise base connection parts 21 with screw holes so that the hinge supports 20 can be screwed to the base member 5. The top of one of the hinge supports 20 is formed with a first link support 23 which receives the ends of the links 90 of a parallel motion mechanism. The stop 60 comprises a recess 25 which houses a roller 63.

A top portion of the main body bracket 30 comprises arcuate parts 33 screwed to a female part 75 of the rotary coupling 70, while a bottom portion of the main body bracket 30 is coupled to the monitor hinge 50 to allow rotation of the monitor body 3 relative to the link member 10. The main body bracket 30 has a cable accommodation part 35 to accommodate the image signal cable connecting the monitor body 3 to the base member 5.

As shown in Figure 6, the stop 60 comprises a protrusion 61, formed on the link member 10, and the roller 63 in the hinge supports 20 which receives the protrusion 61 when the link member 10 is folded down.

The protrusion 61 protrudes at least on the lower part 11 of the link member 10.

The roller 63 is arranged to be pushed into the recess 25. An elastic member 67 biases the roller 63 upwards against the action of the protrusion 31.

The elastic member 67 is a coil spring. The strength of the elastic member 67 is set to a degree such that the protrusion 61 can be stopped by the roller 63, and such that the protrusion 61 can pass by the roller 63 pushing the roller 63 downward as the link member 10 is further pushed downward.

Accordingly, when the link member 10 is pushed down and the protrusion 61 makes contact with the roller 63, the protrusion 61 overcomes the elastic force of the elastic member 67 and passes by the roller 63, causing the link member 10 to be parallel to the surface of the base member 5.

The rotary coupling 70 is provided between the monitor body 3 and the main body bracket 30 to enable the monitor body 3 to be rotated about an axis normal to its screen. The rotary coupling 70 comprises a male part 71 on the monitor body 3 and a female part 75 provided between the male part 71 and the main body bracket 30.

A first side of the male part 71 is screwed in a recess 4 in the back of the monitor body 3. A second side of the male part 71 has a backwards protruding annular shaft 72.

A first part of the female part 75 has a shaft accommodating part 76 which rotatably receives the annular shaft 72. A second part of the female part 75 has a main body bracket receiving part 77 which is screwed to the arcuate parts 33 of the main body bracket 30.

The annular shaft 72 has a central hole that is wide enough for the cable that connects the monitor body 3 and the base member 5 to pass through. An lip 73 is formed around the free end of the annular shaft 72 to hold the male part 71 closely to the female part female part 75 to generate rotational friction force. Further, at least one washer 79 is mounted over the annular shaft 72.

The lip 73 is formed when a rear end of the annular shaft 72 is pushed and, thereby, presses against the rear face of the shaft accommodation part 76 of the female part 75. Furthermore, the rotational friction force generated when the lip 73 is pressed is can be overcome by a user so that the user can rotates the monitor body 3.

The washer 79 is provided between the male part 71 and the female part 75 or between the female part 75 and the lip 73. Washers 79 may be provided at both places. The washer 79 provides an elastic force to keep a proper rotation friction between the male part 71 and the female part 75.

A pivoting angle limiter 80 comprises: a protrusion 81 protruding backward from the male part 71 and an arcuate protrusion guiding channel 83 provided to the female part 75 in which the protrusion 81 is received. The channel 83 has an angular extent of 180°. The channel 83 is formed in the front of the female part 75.

However, the protrusion may be formed on the front of the female part 75 with the protrusion guiding part 83 formed on the rear of the male part 71. Furthermore, the angular extent of the channel may be 90° or some other range.

The base hinge 40 is provided between the lower part 11 of the link member 10 and the hinge supports 20. The base hinge 40 comprises a pair of short pins 41 around which the link member 10 can rotate and the pair of hinge supports 20, and a twisting coil spring 43 having a first end combined to the link member 10 and a second end combined to the pair of hinge supports 20.

The first pin 41 is inserted into one side of the lower part 11 of the link member 10 and into one of the hinge supports 20 to enable the link member 10 to rotate up and down relative to the base member 5 when pushed by a user. Accordingly, the user can adjust the height of the monitor 3 relative to the base member 5 by pressing the link member 10 so that it rotates about the first pin 41 relative to the base member 5. The rotating friction force of the first pin 41 can be overcome by the user when the user pushes the link member 10.

The coil spring 43 acts against gravity to provide a counter-balancing effect with respect to the weight of the monitor body 3. Accordingly, the user can rotate the link member 10 easily relative to the base member 5 because the weight of the monitor body 3 is negated by the elastic force of the coil spring 43. Furthermore, the user can rotate the link member 10 up and down by pressing the link member 10 with the same force because the user only needs to overcome the rotational friction force of the first pin 41 to rotate the link member 10 up and down relative to the base member 5.

The monitor hinge 50 is provided between the upper part 13 of the link member 10 and the main body bracket 30. The monitor hinge 50 comprises a link support 55, having a second link support 56 connected to the links 90 of the parallel motion mechanism and rotatably mounted on a first side of the upper part 13 of the link member 10, a second hinge pin 51, rotatably inserted into a first side of the link support 55 and a first side of the main body bracket 30, and a shaft 58 provided on a second side of the main body bracket 30 and rotatably inserted into a rotating shaft support 59, provided on a second side of the upper part 13 of the link member 10. The monitor hinge 50 may further comprise a spring member (not shown) connected between the link member 10 on a first side thereof and the main body bracket 30 on a second side thereof to provide a force opposing a downward rotation of the monitor body 3 under its own weight.

The link support 55 is rotatably supported via a support accommodation part 53 provided on the first side of the upper part 13 of the link member 10.

The second hinge pin 51 is tightly but rotatably inserted into a second shaft accommodation part 57 provided in the first side of the main body bracket 30 to provide the rotation friction force. Accordingly, the main body bracket 30 combined to the monitor body 3 rotates about the second hinge axis 51 relative to the link member 10 when the user pushes the monitor body 3. The rotation friction force of the second hinge axis 51 can be overcome by the user when the user presses the monitor body 3.

The pair of auxiliary bar-shaped link members 90 are provided to a first side of the link member 10. The auxiliary link members 90 are rotatably connected to the first link support 23 and to the second link support 56. The auxiliary link member 90 is installed on the first link support 23 and the second link support 56 to be deviated from an axis of the first pin 41 and the second hinge axis 51.

Accordingly, when the link member 10 is pushed to rotate up and down relative to the base member 5, the main body bracket 30 is rotated along the link support 55 via the auxiliary link members 90. In other words, when the link member 10 rotates downward, the link support 55 and the main body bracket 30 rotate backward, eventually rotating the monitor body 3 backward. And when the user tries to push and tilt only the main body bracket 30 relative to the link member 10 without rotating the link member 10, only the main body bracket 30 rotates as the force applied to rotate the main body bracket 30 surmounts the rotation friction force formed between the second hinge axis 51 and the second shaft accommodation part 57, while the link support 55 does not rotate with the auxiliary link member 90.

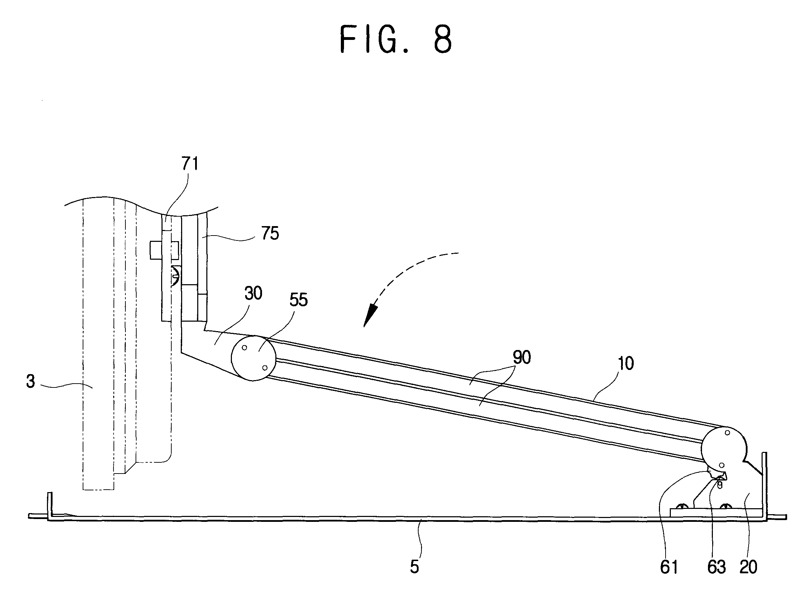

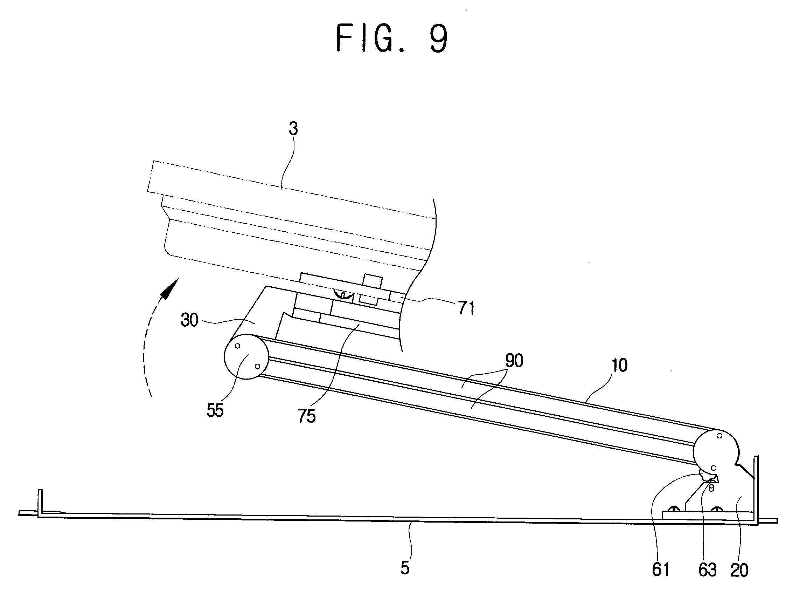

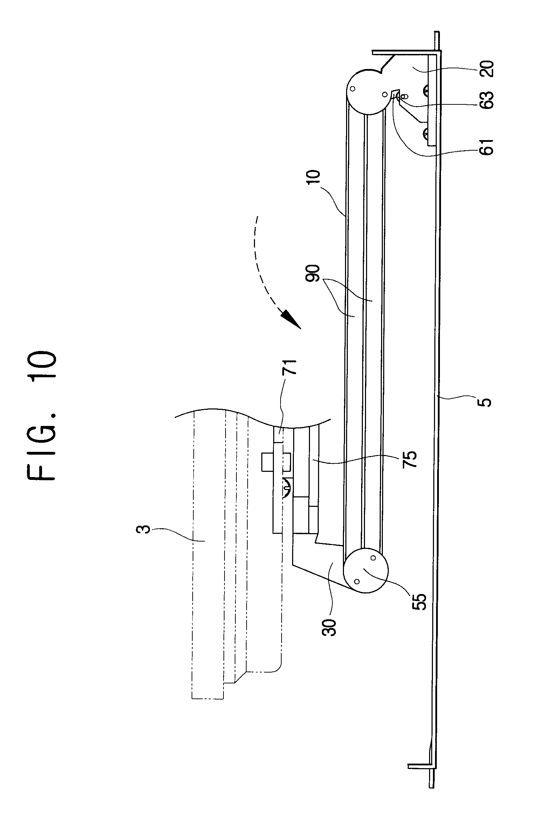

When a user wants to fold the monitor body 3 so that it lies parallel to the base member 5 and the monitor body 3 shown in Figure 2 is pushed downward, the protrusion 61 provided to link member 10 stops rotating as the protrusion 61 is blocked by the roller 63 provided on one of the hinge supports 20 before the lower part of the monitor body 3 makes contact with the base member 5 as shown in Figure 8. The monitor body 3 can be pushed to tilt backward and to be parallel to the surface of the link member 10. (Refer to Figure 9) Accordingly, if the monitor body 3 is pushed downward further, the protrusion 61 overcomes the elastic force of the elastic member 67 and passes by the roller 63 to allow the monitor body 3 to be folded parallel to the base member 5. (Refer to Figure 10)

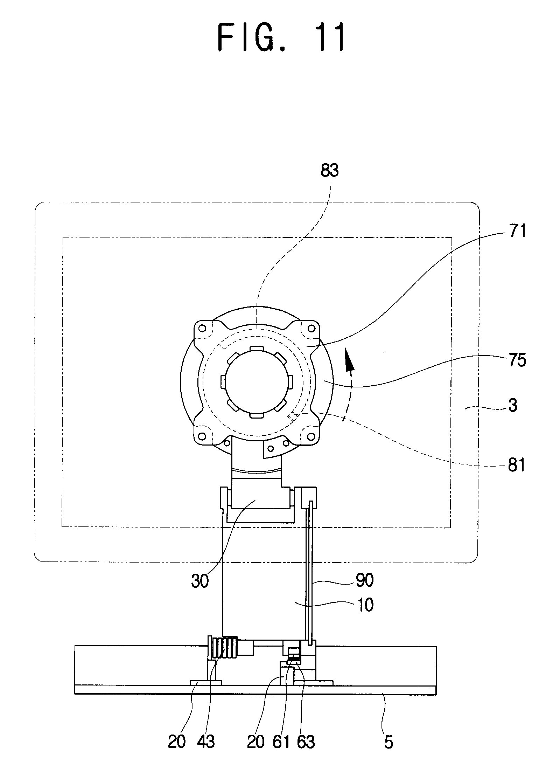

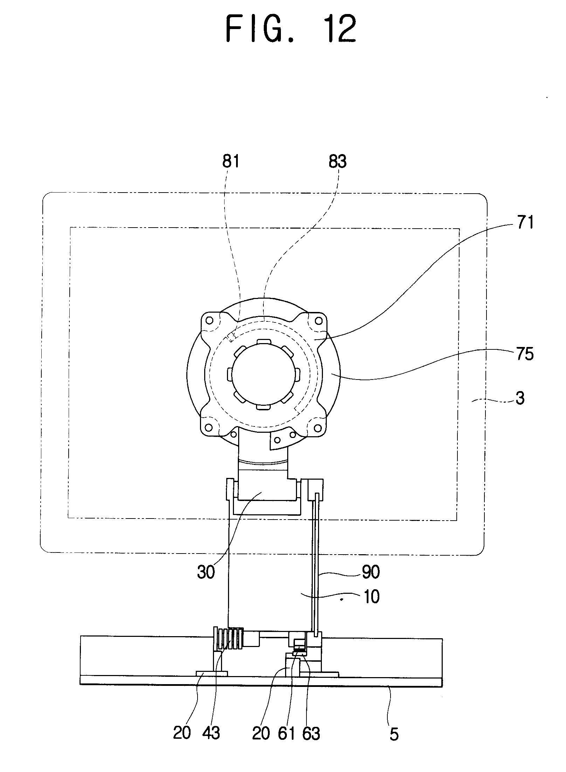

The monitor body 3 pivots relative to the main body bracket 30. Figure 11 illustrates the monitor body 3 that rotates about the annular shaft 72. Accordingly, the protrusion 81 rotates along the protrusion guiding part 83. Herein, the pivoting range of the monitor body 3 relative to the main body bracket 30 is from 0 to 180 degrees because the angular separation of the opposite ends of the protrusion guiding channel 83 is 180 degrees. (Refer to Figure 12) Thus, thus picture displayed on the monitor body 3 can be easily viewed by the user when the monitor body 3 is pivoted to 180 degrees relative to the main body bracket 30, and when the monitor body 3 is folded to be parallel to the base member 5.

The base member 5 may be mounted to vertical surfaces.

Accordingly, the monitor can prevent the lower part of the monitor body from making contact with the base member when the height of the monitor body is adjusted, and is convenient to use because the monitor body can be tilted relative to the base member. Further, package size of the monitor is reduced to decrease transportation expense upon delivery as the monitor body can be folded to be parallel to the base member.

## Claims

1. A monitor comprising a base (5) and a screen unit (3) mounted to the base by a pivoting mechanism (10, 40, 50), **characterised by** a stop (60) for limiting movement of the screen unit (3) such that the it cannot come into contact with the base (5) or a surface on which the base (5) is located when the monitor is in its operational configuration.

2. A monitor according to claim 1, wherein the screen unit (3) is connected to the base (5) by a parallel motion mechanism (23, 55, 90).

3. A monitor according to claim 1 or 2, wherein the screen unit (3) is attached to the pivoting mechanism (10, 40, 50) by a rotary coupling (70) which enables the screen unit (3) to be rotated about an axis normal to its screen.

4. A monitor according to claim 3, wherein the rotary coupling (70) comprises an annular male part (72) received within a female part (75).

5. A monitor having a monitor body to display a picture and a base member to support the monitor body, comprising:
a link member provided between the monitor body and the base member;
a base hinge to rotatably connect the link member and the base member and enable the link member to rotate relative to a surface of the base member;
a monitor hinge, spaced from the base hinge , to rotatably combine the link member and the monitor body; and
a rotating limiter, provided between the link member and the base member, to prevent a lower part of the monitor body from making contact with the base member or an installing surface of the base member when the link member rotates against the base member.

6. The monitor according to claim 1, further comprising:
a base bracket, combined to the base member and the base hinge, to support the base hinge.

7. The monitor according to claim 2, wherein the rotating limiter further comprises:
a stopping protrusion provided on the link member; and
a stopper, provided on the base bracket, to make contact with the stopping protrusion to stop rotation of the link member.

8. The monitor according to claim 3, wherein the base bracket further comprises:
a stopper accommodation part to support the stopper when the stopper enters and exits the stopper accommodation part; and
an elastic member to elastically push the stopper provided between the stopper and the stopper accommodation part.

9. The monitor according to claim 4, wherein the stopping protrusion surmounts an elastic force of the elastic member to enable the link member to rotate to a position parallel to the surface of the base member when the link member is pushed and the stopping protrusion makes contact with the stopper.

10. The monitor according to claim 1, wherein the monitor body further comprises:
a pivoting hinge to pivotably combine the monitor body and the monitor hinge to enable the monitor body to pivot relative to the monitor hinge.

11. The monitor according to claim 6, further comprising:
a main body bracket provided between the pivoting hinge and the monitor hinge.

12. The monitor according to claim 7, wherein a first side of the main body bracket is combined to the monitor hinge to enable the monitor body to rotate relative to the link member, and
a second side of the main body bracket is combined to the pivoting hinge to enable the monitor body to pivot relative to the main body bracket.

13. The monitor according to claim 8, wherein the pivoting hinge further comprises:
a monitor bracket having a first side combined to the monitor body;
a pivoting shaft that protrudes away from the monitor body provided to a second side of the monitor; and
a pivoting bracket having a first part formed with a shaft accommodation part pivotably combined with the pivoting shaft, and a second part combined with the main body bracket.

14. The monitor according to claim 9, wherein the pivoting shaft is of a cylindrical hollow shape in a middle area of the monitor bracket with an edge of the cylindrical hollow protruding backward.

15. The monitor according to claim 10, further comprising:
a bending part formed on an end of the pivoting shaft, to provide a pivoting friction force between the monitor bracket and the pivoting bracket when a rear edge of the shaft accommodation part is pushed.

16. The monitor according to claim 11, wherein further comprising:
a washer provided between the monitor bracket and the pivoting bracket and/or between the pivoting bracket and the bending part.

17. The monitor according to claim 3, wherein the monitor body further comprises:
a pivoting hinge to pivotably combine the monitor body and the monitor hinge, to enable the monitor body to pivot relative to the monitor hinge.

18. The monitor according to claim 13, further comprising:
a main body bracket provided between the pivoting hinge and the monitor hinge.

19. The monitor according to claim 14, wherein a first side of the main body bracket is combined to the monitor hinge to enable the monitor body to rotate relative to the link member, and
a second side of the main body bracket is combined to the pivoting hinge to enable the monitor body to pivot relative to the main body bracket.

20. The monitor according to claim 15, wherein the pivoting hinge further comprises:
a monitor bracket having a first side combined to the monitor body;
a pivoting shaft that protrudes away from the monitor body provided to a second side of the monitor bracket; and
a pivoting bracket having a first part formed with a shaft accommodation part pivotably combined with the pivoting shaft, and a second part combined with the main body bracket.

21. The monitor according to claim 16, wherein the pivoting shaft is of a cylindrical hollow shape in a middle area of the monitor bracket with an edge of the cylindrical hollow protruding backward.

22. The monitor according to claim 17, further comprising:
a bending part formed on an end of the pivoting shaft to provide a pivoting friction force between the monitor bracket and the pivoting bracket by pushing a rear edge of the shaft accommodation part.

23. The monitor according to claim 18, further comprising:
a washer provided between the monitor bracket and the pivoting bracket and/or between the pivoting bracket and the bending part.

24. The monitor according to claim 9, wherein the pivoting hinge further comprises:
a pivoting angle limiter to limit a pivoting angle range of the monitor bracket relative to the pivoting bracket.

25. The monitor according to claim 20, wherein the pivoting angle limiter further comprises:
a protrusion protruding backward from the monitor bracket; and
a protrusion guiding part provided to the pivoting bracket, to pivotably guide the protrusion within a predetermined angle range.

26. The monitor according to claim 21, wherein the pivoting angle range of the monitor bracket relative to the pivoting bracket ranges from 0 to 180 degrees.

27. The monitor according to claim 16, wherein the pivoting hinge further comprises:
a pivoting angle limiter to limit a pivoting angle range of the monitor bracket relative to the pivoting bracket.

28. The monitor according to claim 23, wherein the pivoting angle limiter comprises:
a protrusion protruding backward from the monitor bracket; and
a protrusion guiding part provided to the pivoting bracket, to pivotably guide the protrusion within a predetermined angle range.

29. The monitor according to claim 24, wherein the pivoting angle range of the monitor bracket relative to the pivoting bracket ranges from 0 to 180 degrees.

30. The monitor according to claim 2, further comprising:
an auxiliary link member provided parallel to the link member, extending from the monitor main body to the base member.

31. The monitor according to claim 26, wherein the base bracket further comprises:
a base combining part provided to a bottom portion of the base bracket, to support the monitor main body;
a first link support provided to a top portion of the base bracket to rotatably support the auxiliary link member; and
a stopper accommodation part to accommodate a stopper.

32. The monitor according to claim 2, wherein the base bracket further comprises:
a pair of base brackets.

33. The monitor according to claim 28, wherein the link member is shaped similar to a rectangular plate.

34. The monitor according to claim 29, wherein at least one of the pair of base brackets further comprises:
a stopping protrusion provided on the link member; and
a stopper provided to the at least one of the pair of base bracket to make contact with the stopping protrusion to stop rotation of the link member.

35. The monitor according to claim 28, wherein the base hinge further comprises:
a pair of first hinge axes rotatably combined to the lower part of the link member and the pair of base brackets; and
a twisting coil spring having a first end combined to the link member and a second end combined the pair of base brackets.

36. The monitor according to claim 31, wherein the elastic force of the twisting coil spring is equal to force due to a weight of the monitor body combined to the link member.

37. The monitor according to claim 27, wherein the monitor hinge further comprises:
a second link support combined to the auxiliary link member and rotatably combined to a first side of the upper part of the link member;
a second hinge axis rotatably combined to the first side of the link support and a first side of the main body bracket; and
a rotating shaft provided to a second side of the main body bracket and rotatably combined to a rotating shaft support provided to a second side of the upper part of the link member.

38. The monitor according to claim 33, further comprising:
a support accommodation part provided to the first side of the upper part of the link member to rotatably support the link support.
